# FASCICULE DE BREVET EUROPEEN

(11) **EP 4 151 132 B1**
(45) Date de publication et mention de la délivrance du brevet: **24.04.2024**
(21) Numéro de dépôt: 22196004.0
(22) Date de dépôt: 15.09.2022
(51) Int. Cl.: A47J 37/06, A47J 27/08

(54) **APPAREIL DE CUISSON ELECTRIQUE**
ELEKTRISCHES KOCHGERÄT
ELECTRICAL COOKING APPLIANCE

(30) Priorité: 17.09.2021 FR 2109764
(43) Date de publication de la demande: 22.03.2023
(73) Titulaire: SEB S.A., 69130 Ecully (FR)
(72) Inventeur: DOAT, Géraldine, 69134 Ecully Cedex (FR); POUPART, Antonin, 69134 Ecully Cedex (FR)
(74) Mandataire: SEB Développement

(56) Documents cités:
- WO-A1-2019/238794
- CN-U- 209 090 836
- US-A1- 2021 121 012

## Description

### Domaine technique

La présente invention concerne de manière générale un appareil de cuisson électrique pour cuire des aliments soit avec soit sans pression, tel qu'un autocuiseur électrique.

### Etat de la technique

Le document CN209090836U divulgue un appareil de cuisson comprenant :
- un boîtier comportant une cuve de cuisson qui délimite un volume de cuisson et qui comprend une ouverture d'accès à travers laquelle des aliments peuvent être introduits dans le volume de cuisson, et un couvercle déplaçable entre une position ouverte dans laquelle le couvercle autorise un accès à la cuve de cuisson et une position fermée dans laquelle le couvercle empêche l'accès à la cuve de cuisson, le couvercle comportant un corps de couvercle et un couvercle intérieur fixé au corps de couvercle, le couvercle intérieur comportant une partie d'obturation fixe qui est fixée au corps de couvercle et une partie d'obturation mobile qui est déplaçable par rapport à la partie d'obturation fixe selon une direction de déplacement et entre une configuration relevée dans laquelle la partie d'obturation fixe et la partie d'obturation mobile obturent de manière étanche la cuve de cuisson lorsque le couvercle est dans la position fermée, et une configuration abaissée dans laquelle la partie d'obturation fixe et la partie d'obturation mobile définissent un passage d'évacuation d'air et un passage d'admission d'air qui sont chacun reliés fluidiquement au volume de cuisson lorsque le couvercle est dans la position fermée,
- un mécanisme d'entraînement configuré pour déplacer la partie d'obturation mobile entre la configuration abaissée et la configuration relevée,
- un ventilateur disposé dans le couvercle en regard de la partie d'obturation mobile, et configuré pour générer un flux d'air dans le volume de cuisson, le ventilateur étant configuré de telle sorte que le flux d'air généré est évacué hors du volume de cuisson en s'écoulant à travers le passage d'évacuation d'air et est réintroduit dans le volume de cuisson en s'écoulant à travers le passage d'admission d'air, et
- un dispositif de chauffage qui est fixé au couvercle et qui est configuré pour chauffer le flux d'air généré par le ventilateur.

Un tel appareil de cuisson électrique permet de pouvoir cuire des aliments contenus dans le volume de cuisson selon un mode de cuisson sous pression lorsque simultanément le couvercle occupe la position fermée et la partie d'obturation mobile est dans la configuration relevée, et selon un mode de cuisson à air chaud lorsque simultanément le couvercle occupe la position fermée et la partie d'obturation mobile est dans la configuration abaissée.

Selon l'appareil de cuisson électrique décrit dans le document CN209090836U, le dispositif de chauffage et le ventilateur sont disposés dans une chambre interne délimitée par le corps de couvercle et le couvercle intérieur, ce qui a pour conséquence d'accroître les dimensions externes du couvercle. Ainsi, afin de limiter l'encombrement de l'appareil de cuisson électrique, il est nécessaire de limiter la taille de la cuve de cuisson et donc de limiter la quantité d'aliments pouvant être cuits dans cette dernière.

De plus, les types de cuisson pouvant être réalisés avec un tel appareil de cuisson électrique sont limités.

### Résumé de l'invention

La présente invention vise à remédier à tout ou partie de ces inconvénients.

Le problème technique à la base de l'invention consiste notamment à fournir un appareil de cuisson électrique qui soit compact, tout en permettant de cuire des aliments selon différents types de cuisson, et en particulier selon un mode de cuisson sous pression et un mode de cuisson à air chaud, et de pouvoir réaliser un nombre de recettes accru.

A cet effet, la présente invention concerne un appareil de cuisson électrique comprenant :
- un boîtier comportant une cuve de cuisson qui délimite un volume de cuisson et qui comprend une ouverture d'accès à travers laquelle des aliments peuvent être introduits dans le volume de cuisson, et un couvercle déplaçable entre une position ouverte dans laquelle le couvercle autorise un accès à la cuve de cuisson et une position fermée dans laquelle le couvercle empêche l'accès à la cuve de cuisson, le couvercle comportant un corps de couvercle et un couvercle intérieur fixé au corps de couvercle, le couvercle intérieur comportant une partie d'obturation fixe qui est fixée au corps de couvercle et une partie d'obturation mobile qui est déplaçable par rapport à la partie d'obturation fixe selon une direction de déplacement et entre une configuration relevée dans laquelle la partie d'obturation fixe et la partie d'obturation mobile obturent de manière étanche la cuve de cuisson lorsque le couvercle est dans la position fermée, et une configuration abaissée dans laquelle lorsque le couvercle est dans la position fermée alors la partie d'obturation fixe et la partie d'obturation mobile définissent un passage d'évacuation d'air vers l'extérieur du volume de cuisson et un passage d'admission d'air vers l'intérieur du volume de cuisson,
- un mécanisme d'entraînement configuré pour déplacer la partie d'obturation mobile entre la configuration abaissée et la configuration relevée,
- un ventilateur disposé dans le couvercle en regard du couvercle intérieur, et configuré pour générer un flux d'air dans le volume de cuisson, le ventilateur étant configuré de telle sorte que le flux d'air généré est évacué hors du volume de cuisson en s'écoulant à travers le passage d'évacuation d'air et est réintroduit dans le volume de cuisson en s'écoulant à travers le passage d'admission d'air,
- un dispositif de chauffage qui est fixé au couvercle et qui est configuré pour chauffer le flux d'air généré par le ventilateur,
caractérisé en ce que le dispositif de chauffage est disposé sur une face inférieure du couvercle intérieur et situé en regard du volume de cuisson lorsque le couvercle occupe la position fermée, et en ce que le dispositif de chauffage est situé à proximité du passage d'admission d'air lorsque la partie d'obturation mobile est dans la configuration abaissée.

Ainsi, l'appareil de cuisson électrique selon la présente invention permet, au choix de l'utilisateur et comme l'appareil de cuisson électrique décrit dans le document CN209090836U, de pouvoir cuire des aliments contenus dans le volume de cuisson selon un mode de cuisson sous pression, ou selon un mode de cuisson à air chaud.

Cependant, l'agencement spécifique du dispositif de chauffage permet en plus de limiter l'encombrement du couvercle, et donc de maximiser le volume de cuisson de la cuve de cuisson sans impacter l'encombrement de l'appareil de cuisson électrique.

En outre, la disposition du dispositif de chauffage en regard du volume de cuisson permet également de pouvoir gratiner, en fin de cuisson, les aliments contenus dans la cuve de cuisson, ce qui confère à l'appareil de cuisson électrique selon la présente invention un mode de cuisson additionnel par rapport à ceux pouvant être réalisés avec l'appareil de cuisson électrique décrit dans le document CN209090836U.

L'appareil de cuisson électrique peut en outre présenter une ou plusieurs des caractéristiques suivantes, prises seules ou en combinaison.

Selon un mode de réalisation de l'invention, la partie d'obturation mobile est déplaçable en translation selon une direction de déplacement.

Selon un mode de réalisation de l'invention, la direction de déplacement est sensiblement verticale lorsque l'appareil de cuisson électrique repose sur une surface horizontale.

Selon un mode de réalisation, le passage d'évacuation d'air et le passage d'admission d'air sont deux passages distincts.

Selon un mode de réalisation de l'invention, le passage d'évacuation d'air et le passage d'admission d'air débouchent chacun dans le volume de cuisson lorsque le couvercle est dans la position fermée et que la partie d'obturation mobile est dans la configuration abaissée.

Selon un mode de réalisation de l'invention, le dispositif de chauffage est configuré pour être situé au moins en partie en regard du passage d'admission d'air lorsque la partie d'obturation mobile est dans la configuration abaissée.

Selon un mode de réalisation de l'invention, lorsque la partie d'obturation mobile est dans la configuration abaissée, le ventilateur est configuré pour orienter radialement le flux d'air provenant du passage d'évacuation d'air en direction du passage d'admission d'air.

Selon un mode de réalisation de l'invention, le ventilateur est un ventilateur radial centrifuge. De façon avantageuse, le ventilateur comporte une roue annulaire comprenant une pluralité d'aubes.

Selon un mode de réalisation de l'invention, le ventilateur est déplaçable par rapport à la partie d'obturation fixe selon la direction de déplacement et entre une première position de ventilateur dans laquelle le ventilateur est éloigné du dispositif de chauffage et la partie d'obturation mobile est dans la configuration relevée, et une deuxième position de ventilateur dans laquelle le ventilateur est rapproché du dispositif de chauffage et la partie d'obturation mobile est dans la configuration abaissée.

Selon un mode de réalisation de l'invention, le couvercle intérieur et le corps de couvercle délimitent une chambre interne du couvercle qui est configurée pour être reliée fluidiquement au volume de cuisson lorsque la partie d'obturation mobile est dans la configuration abaissée, et pour être isolée fluidiquement du volume de cuisson lorsque la partie d'obturation mobile est dans la configuration relevée.

Selon un mode de réalisation de l'invention, le ventilateur est configuré pour être disposé dans la chambre interne du couvercle lorsque le ventilateur occupe la première position de ventilateur.

Selon un mode de réalisation de l'invention, le ventilateur est configuré pour être disposé dans la chambre interne du couvercle et situé en regard du passage d'admission d'air lorsque le ventilateur occupe la deuxième position de ventilateur.

Selon un mode de réalisation de l'invention, le mécanisme d'entraînement est configuré pour déplacer le ventilateur entre la première position de ventilateur et la deuxième position de ventilateur.

Selon un mode de réalisation de l'invention, le mécanisme d'entraînement est configuré pour déplacer simultanément la partie d'obturation mobile de la configuration relevée à la configuration abaissée et le ventilateur de la première position de ventilateur à la deuxième position de ventilateur, et pour déplacer simultanément la partie d'obturation mobile de la configuration abaissée à la configuration relevée et le ventilateur de la deuxième position de ventilateur à la première position de ventilateur.

Selon un mode de réalisation de l'invention, le passage d'admission d'air est globalement annulaire et le dispositif de chauffage est configuré pour s'étendre au moins en partie autour du passage d'admission d'air.

Selon un mode de réalisation de l'invention, le dispositif de chauffage comporte un élément chauffant du type résistif. De façon avantageuse, l'élément chauffant du type résistif est courbé et est configuré pour s'étendre au moins en partie autour du passage d'admission d'air.

Selon un mode de réalisation de l'invention, l'élément chauffant du type résistif présente une forme globalement en arc de cercle ayant par exemple un angle au centre supérieur à 180°, et par exemple supérieur à 270°.

Selon un mode de réalisation de l'invention, le passage d'admission d'air et le passage d'évacuation d'air s'étendent sensiblement coaxialement.

Selon un mode de réalisation de l'invention, le passage d'évacuation d'air est globalement annulaire.

Selon un mode de réalisation de l'invention, le passage d'admission d'air s'étend autour du passage d'évacuation d'air.

Selon un mode de réalisation de l'invention, l'appareil de cuisson électrique comporte une unité d'entraînement configurée pour entraîner en rotation le ventilateur, l'unité d'entraînement comportant un moteur d'entraînement et un mécanisme de transmission de mouvement qui est configuré pour transmettre un mouvement de rotation du moteur d'entraînement au ventilateur. Le mécanisme de transmission de mouvement peut par exemple comporter un engrenage couplé en rotation à un arbre de sortie du moteur d'entraînement et une roue dentée solidaire en rotation du ventilateur.

Selon un mode de réalisation de l'invention, la partie d'obturation mobile comporte :
- un premier organe d'obturation qui est déplaçable par rapport à la partie d'obturation fixe selon la direction de déplacement, le premier organe d'obturation étant configuré pour obturer une première ouverture de passage prévue sur la partie d'obturation fixe lorsque la partie d'obturation mobile est dans la configuration relevée et pour libérer la première ouverture de passage lorsque la partie d'obturation mobile est dans la configuration abaissée, le premier organe d'obturation et la partie d'obturation fixe étant configurés pour délimiter le passage d'admission d'air lorsque la partie d'obturation mobile est dans la configuration abaissée, et
- un deuxième organe d'obturation qui est déplaçable par rapport au premier organe d'obturation selon la direction de déplacement, le deuxième organe d'obturation étant configuré pour obturer une deuxième ouverture de passage prévue sur le premier organe d'obturation lorsque la partie d'obturation mobile est dans la configuration relevée et pour libérer la deuxième ouverture de passage lorsque la partie d'obturation mobile est dans la configuration abaissée, les premier et deuxième organes d'obturation étant configurés pour délimiter le passage d'évacuation d'air lorsque la partie d'obturation mobile est dans la configuration abaissée.

Selon un mode de réalisation de l'invention, lorsque la partie d'obturation mobile est dans la configuration abaissée, alors le premier organe d'obturation est espacé d'une première distance d'espacement prédéterminée de la partie d'obturation fixe selon la direction de déplacement, et le deuxième organe d'obturation est espacé d'une deuxième distance d'espacement prédéterminée du premier organe d'obturation selon la direction de déplacement. De façon avantageuse, les première et deuxième distances d'espacement sont sensiblement identiques.

Selon un mode de réalisation de l'invention, la première ouverture de passage est prévue dans une partie centrale de la partie d'obturation fixe, et la deuxième ouverture de passage est prévue dans une partie centrale du premier organe d'obturation.

Selon un mode de réalisation de l'invention, le premier organe d'obturation est annulaire.

Selon un mode de réalisation de l'invention, les premier et deuxième organes d'obturation sont disposés coaxialement.

Selon un mode de réalisation de l'invention, chacun des premier et deuxième organes d'obturation est globalement plat.

Selon un mode de réalisation de l'invention, le couvercle intérieur comporte un joint d'étanchéité annulaire qui est fixé à la partie d'obturation fixe et qui est configuré pour coopérer de manière étanche avec un bord périphérique supérieur de la cuve de cuisson lorsque le couvercle occupe la position fermée.

Selon un mode de réalisation de l'invention, le couvercle intérieur est fixé de manière amovible au corps de couvercle. Ces dispositions permettent de faciliter le nettoyage du couvercle et en particulier du couvercle intérieur.

Selon un mode de réalisation de l'invention, le mécanisme d'entraînement comporte un organe de préhension qui est configuré pour être manipulé par un utilisateur lorsque le couvercle occupe la position fermée, et qui est monté rotatif par rapport au corps de couvercle autour d'un axe de rotation, le mécanisme d'entraînement étant configuré de telle sorte qu'une rotation de l'organe de préhension dans un premier sens de rotation entraîne un déplacement de la partie d'obturation mobile dans la configuration abaissée et de telle sorte qu'une rotation de l'organe de préhension dans un deuxième sens de rotation, opposé au premier sens de rotation, entraîne un déplacement de la partie d'obturation mobile dans la configuration relevée.

Selon un mode de réalisation de l'invention, l'axe de rotation de l'organe de préhension est sensiblement parallèle à la direction de déplacement.

Selon un mode de réalisation de l'invention, le mécanisme d'entraînement comporte un arbre de déplacement ayant un axe longitudinal qui s'étend sensiblement parallèlement à la direction de déplacement, l'arbre de déplacement étant déplaçable en translation par rapport au corps de couvercle selon la direction de déplacement, l'arbre de déplacement étant relié mécaniquement à l'organe de préhension et à la partie d'obturation mobile de telle sorte qu'une rotation de l'organe de préhension dans le premier sens de rotation entraîne un déplacement en translation vers le bas de l'arbre de déplacement et un déplacement de la partie d'obturation mobile vers la configuration abaissée et de telle sorte qu'une rotation de l'organe de préhension dans le deuxième sens de rotation entraîne un déplacement en translation vers le haut de l'arbre de déplacement et un déplacement de la partie d'obturation mobile vers la configuration relevée.

Selon un mode de réalisation de l'invention, le deuxième organe d'obturation est fixé à l'arbre de déplacement, et par exemple à une portion d'extrémité inférieure de l'arbre de déplacement.

Selon un mode de réalisation de l'invention, le couvercle intérieur est un couvercle intérieur télescopique, la configuration abaissée de la partie d'obturation mobile correspondant à une configuration déployée des premier et deuxième organes d'obturation et la configuration relevée de la partie d'obturation mobile correspondant à une configuration escamotée des premier et deuxième organes d'obturation.

Selon un mode de réalisation de l'invention, le ventilateur est solidaire en translation de l'arbre de déplacement.

Selon un mode de réalisation de l'invention, l'appareil de cuisson électrique comporte au moins un palier, tel qu'un roulement à bille, qui est fixé à l'arbre de déplacement et qui est configuré pour supporter en rotation le ventilateur. Le palier peut par exemple être interposé entre la roue dentée et l'arbre de déplacement.

Selon un mode de réalisation de l'invention, le ventilateur est disposé autour de l'arbre de déplacement. De façon avantageuse, le ventilateur et l'arbre de déplacement sont disposés coaxialement.

Selon un mode de réalisation de l'invention, le couvercle intérieur est configuré pour être situé en regard du volume de cuisson lorsque le couvercle occupe la position fermée.

Selon un mode de réalisation de l'invention, le couvercle comporte une ouverture d'évacuation d'air débouchant dans une surface externe du couvercle, le passage d'évacuation d'air et le passage d'admission d'air étant configurés pour être reliés fluidiquement à l'ouverture d'évacuation d'air.

Selon un mode de réalisation de l'invention, le couvercle est monté pivotant par rapport à la cuve de cuisson.

Selon un mode de réalisation de l'invention, l'appareil de cuisson électrique comporte une soupape de refoulement qui est fixée au couvercle, et par exemple à la partie d'obturation fixe, et qui est configurée pour relier fluidiquement le volume de cuisson avec l'atmosphère lorsque la pression dans le volume de cuisson dépasse une valeur de seuil prédéterminée.

Selon un mode de réalisation de l'invention, l'appareil de cuisson électrique comporte un organe de guidage qui est fixé au corps de couvercle et qui est configuré pour guider en translation l'arbre de déplacement par rapport au corps de couvercle.

Selon un mode de réalisation de l'invention, l'appareil de cuisson électrique comporte une unité de commande configurée pour commander le fonctionnement de l'appareil de cuisson électrique selon un mode de cuisson sous pression lorsque simultanément le couvercle occupe la position fermée et la partie d'obturation mobile est dans la configuration relevée, et selon un mode de cuisson à air chaud lorsque simultanément le couvercle occupe la position fermée et la partie d'obturation mobile est dans la configuration abaissée.

### Brève description des figures

De toute façon l'invention sera bien comprise à l'aide de la description qui suit en référence aux dessins schématiques annexés représentant, à titre d'exemple non limitatif, une forme d'exécution de cet appareil de cuisson électrique.
[Fig 1] est une vue écorchée partiellement et de côté d'un appareil de cuisson électrique selon la présente invention.
[Fig 2] est une vue en coupe longitudinale de l'appareil de cuisson électrique de la figure 1.
[Fig 3] est une vue partielle en perspective de dessus d'une partie du couvercle de l'appareil de cuisson électrique de la figure 1.
[Fig. 4] est une autre vue partielle en perspective de dessus d'une partie du couvercle de l'appareil de cuisson électrique de la figure 1.
[Fig 5] est une vue en perspective de dessous de la partie du couvercle des figures 3 et 4 montrant une partie d'obturation mobile en configuration relevée.
[Fig 6] est une vue en perspective de dessous de la partie du couvercle des figures 3 et 4 montrant la partie d'obturation mobile en configuration abaissée.
[Fig 7] est une vue en coupe longitudinale de la partie du couvercle de la figure 4 montrant la partie d'obturation mobile en configuration relevée.
[Fig 8] est une vue en coupe longitudinale de la partie du couvercle de la figure 4 montrant la partie d'obturation mobile en configuration abaissée.
[Fig 9] est une vue en perspective tronquée de la partie du couvercle de la figure 4 montrant la partie d'obturation mobile en configuration relevée.
[Fig 10] est une vue en perspective tronquée de la partie du couvercle de la figure 4 montrant la partie d'obturation mobile en configuration abaissée.
[Fig 11] est une vue en perspective de dessus d'un couvercle intérieur appartenant à la partie du couvercle des figures 3 ou 4 et montrant la partie d'obturation mobile en configuration abaissée.
[Fig 12] est une vue en perspective de dessus d'un mécanisme d'entraînement appartenant à l'appareil de cuisson électrique de la figure 1.

### Description détaillée

Dans le présent document, les termes « haut », « bas », « abaissée » et « relevée » employés pour décrire l'appareil de cuisson électrique font références à l'appareil de cuisson électrique en situation d'usage, c'est-à-dire avec le couvercle en position fermée et reposant sur une surface horizontale.

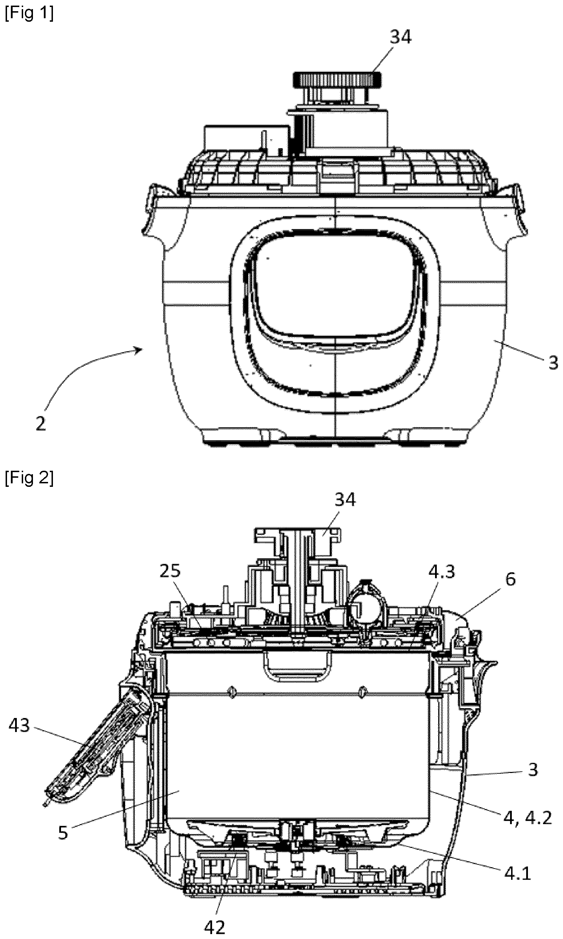

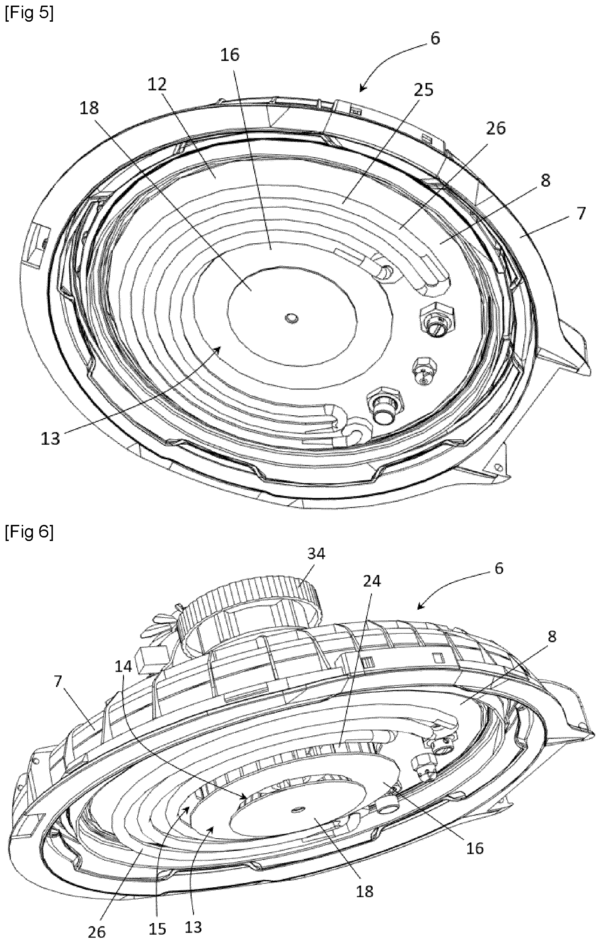

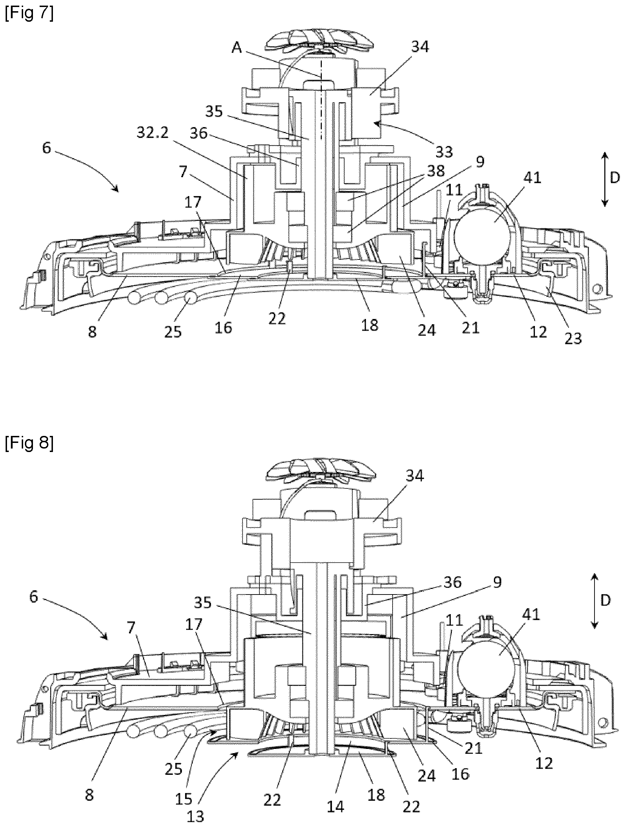

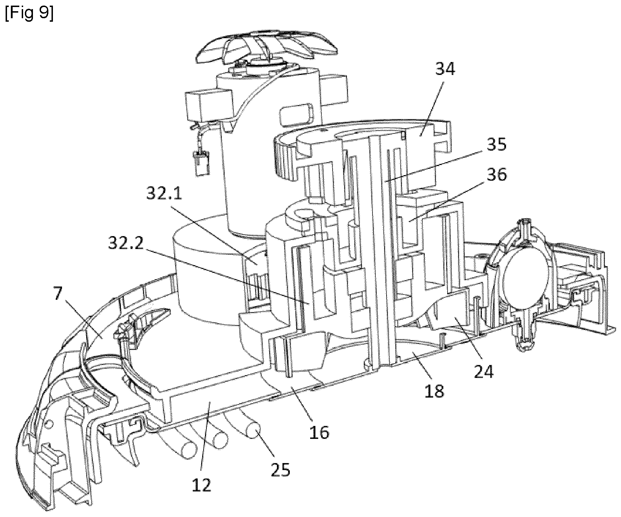

Les figures 1 à 12 représentent un appareil de cuisson électrique 2, et plus particulièrement un appareil de cuisson sous pression électrique, tel qu'un autocuiseur électrique ou un multi-cuiseur électrique avec pression.

Comme montré plus particulièrement sur les figures 1 et 2, l'appareil de cuisson électrique 2 comprend un boîtier 3 comportant une cuve de cuisson 4 qui délimite un volume de cuisson 5. La cuve de cuisson 4 comporte une paroi de fond 4.1, une paroi latérale 4.2 qui s'étend depuis la paroi de fond 4.1, et une ouverture d'accès 4.3 au travers de laquelle des aliments peuvent être introduits dans le volume de cuisson 5, l'ouverture d'accès 4.3 étant délimitée par un bord périphérique supérieur de la paroi latérale 4.2. Selon le mode de réalisation représenté sur les figures, la cuve de cuisson 4 présente une section transversale sensiblement circulaire. Toutefois, la cuve de cuisson 4 pourrait présenter une section transversale d'une toute autre forme, et par exemple carrée ou rectangulaire.

Le boîtier 3 comporte en outre un couvercle 6 déplaçable, par exemple monté pivotant, entre une position ouverte dans laquelle le couvercle 6 libère un accès au volume de cuisson 5 et une position fermée dans laquelle le couvercle 6 empêche l'accès au volume de cuisson 5.

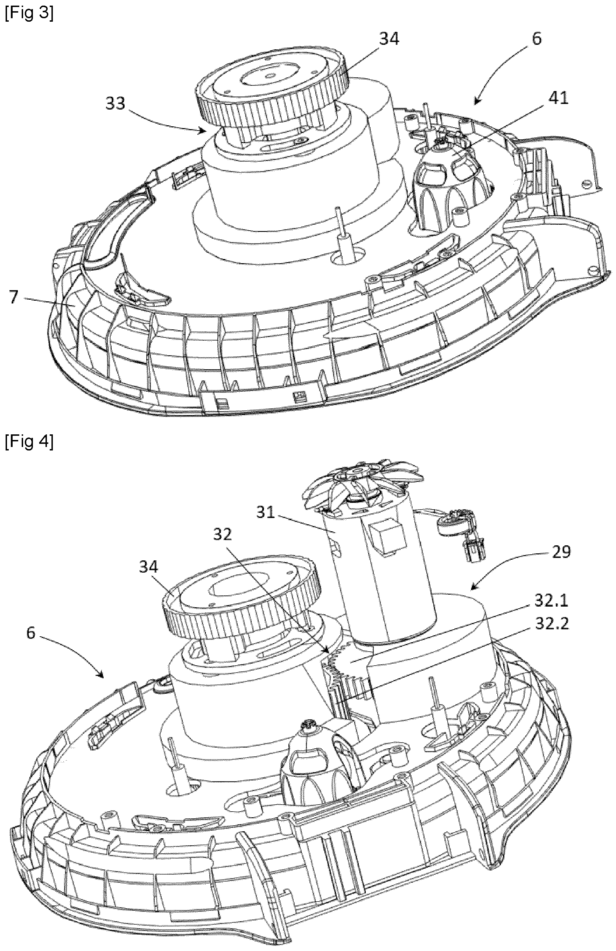

Comme illustré plus particulièrement aux figures 3 à 6, le couvercle 6 comporte un corps de couvercle 7 et un couvercle intérieur 8 fixé au corps de couvercle 7. Le couvercle intérieur 8 est plus particulièrement configuré pour être situé en regard de l'ouverture d'accès 4.3 de la cuve de cuisson 4 lorsque le couvercle 6 occupe la position fermée. Le corps de couvercle 7 et le couvercle intérieur 8 délimitent une chambre interne 9 qui est reliée fluidiquement à une ou plusieurs ouverture(s) d'évacuation d'air 11 débouchant dans une surface externe du corps de couvercle 7.

Le couvercle intérieur 8 comporte une partie d'obturation fixe 12 qui présente par exemple une forme globalement annulaire et qui est fixée au corps de couvercle 7, par exemple de manière amovible, et une partie d'obturation mobile 13 qui est déplaçable en translation par rapport à la partie d'obturation fixe 12 selon une direction de déplacement D. De façon avantageuse, la direction de déplacement D est sensiblement verticale lorsque l'appareil de cuisson électrique 2 repose sur une surface horizontale.

La partie d'obturation mobile 13 est déplaçable entre une configuration relevée dans laquelle la partie d'obturation fixe 12 et la partie d'obturation mobile 13 sont configurées pour obturer de manière étanche la cuve de cuisson 4 lorsque le couvercle 6 est dans la position fermée, et une configuration abaissée dans laquelle la partie d'obturation fixe 12 et la partie d'obturation mobile 13 définissent un passage d'évacuation d'air 14 vers l'extérieur du volume de cuisson 5 et un passage d'admission d'air 15 vers l'intérieur du volume de cuisson 5. D'autres types de déplacements sont toutefois envisageables sans pour autant sortir de la portée de protection de la présente invention, par exemple un mouvement hélicoïdal combinant un mouvement en translation et un mouvement en rotation. De façon avantageuse, la chambre interne 9 est configurée pour être reliée fluidiquement au volume de cuisson 5, via le passage d'évacuation d'air 14 et le passage d'admission d'air 15, lorsque la partie d'obturation mobile 13 est dans la configuration abaissée, et pour être isolée fluidiquement du volume de cuisson 5 lorsque la partie d'obturation mobile 13 est dans la configuration relevée.

Selon le mode de réalisation représenté sur les figures, le passage d'admission d'air 15 et le passage d'évacuation d'air 14 sont chacun globalement annulaires, et sont disposés sensiblement coaxialement. De façon avantageuse, le passage d'admission d'air 15 s'étend autour du passage d'évacuation d'air 14, et le passage d'évacuation d'air 14 et le passage d'admission d'air 15 débouchent chacun dans le volume de cuisson 5 lorsque le couvercle 6 est dans la position fermée.

Selon le mode de réalisation représenté sur les figures, le couvercle intérieur 8 est télescopique et la partie d'obturation mobile 13 comporte :
- un premier organe d'obturation 16 qui est annulaire et qui est déplaçable par rapport à la partie d'obturation fixe 12 selon la direction de déplacement D et entre une première position d'obturation dans laquelle le premier organe d'obturation 16 est configuré pour obturer une première ouverture de passage 17 prévue dans une partie centrale de la partie d'obturation fixe 12, et une première position de libération dans laquelle le premier organe d'obturation 16 est espacé de la partie d'obturation fixe 12 d'une première distance d'espacement D1 mesurée selon la direction de déplacement D et est configuré pour libérer la première ouverture de passage 17, et
- un deuxième organe d'obturation 18 qui présente une forme circulaire et qui est déplaçable par rapport au premier organe d'obturation 16 selon la direction de déplacement D et entre une deuxième position d'obturation dans laquelle le deuxième organe d'obturation 18 est configuré pour obturer une deuxième ouverture de passage 19 prévue dans une partie centrale du premier organe d'obturation 16, et une deuxième position de libération dans laquelle le deuxième organe d'obturation 18 est espacé du premier organe d'obturation 16 d'une deuxième distance d'espacement D2 mesurée selon la direction de déplacement D, qui peut par exemple être sensiblement identique ou différente de la première distance d'espacement D1, et est configuré pour libérer la deuxième ouverture de passage 19.

Les premier et deuxième organes d'obturation 16, 18 sont configurés pour occuper respectivement les première et deuxième positions d'obturation lorsque la partie d'obturation mobile 13 est dans la configuration relevée, et pour occuper respectivement les première et deuxième positions de libération lorsque la partie d'obturation mobile 13 est dans la configuration abaissée.

Ainsi, la configuration abaissée de la partie d'obturation mobile 13 correspond à une configuration déployée des premier et deuxième organes d'obturation 16, 18, et la configuration relevée de la partie d'obturation mobile 13 correspond à une configuration escamotée des premier et deuxième organes d'obturation 16, 18.

De façon avantageuse, le premier organe d'obturation 16 est configuré pour prendre appui contre une face inférieure de la partie d'obturation fixe 12 lorsque le premier organe d'obturation 16 occupe la première position d'obturation, et le deuxième organe d'obturation 18 est configuré pour prendre appui contre une face inférieure du premier organe d'obturation 16 lorsque le deuxième organe d'obturation 18 occupe la deuxième position d'obturation. Le premier organe d'obturation 16 peut être pourvu d'un premier élément d'étanchéité annulaire 16.1 disposé à proximité d'un bord périphérique externe du premier organe d'obturation 16, et le deuxième organe d'obturation 18 peut être pourvu d'un deuxième élément d'étanchéité annulaire 18.1 disposé à proximité d'un bord périphérique externe du deuxième organe d'obturation 18.

Selon le mode de réalisation représenté sur les figures, les premier et deuxième organes d'obturation 16, 18 sont disposés coaxialement, et chacun des premier et deuxième organes d'obturation 16, 18 est globalement plat.

Le premier organe d'obturation 16 et la partie d'obturation fixe 12 sont plus particulièrement configurés pour délimiter le passage d'admission d'air 15 lorsque la partie d'obturation mobile 13 est dans la configuration abaissée (et donc lorsque le premier organe d'obturation 16 est dans la première position de libération), et les premier et deuxième organes d'obturation 16, 18 sont plus particulièrement configurés pour délimiter le passage d'évacuation d'air 14 lorsque la partie d'obturation mobile 13 est dans la configuration abaissée (et donc lorsque le deuxième organe d'obturation 18 est dans la deuxième position de libération).

Selon le mode de réalisation représenté sur les figures, la partie d'obturation fixe 12 est configurée pour supporter le premier organe d'obturation 16 lorsque le premier organe d'obturation 16 occupe la première position de libération. A cet effet, le premier organe d'obturation 16 comporte une pluralité de premiers doigts de retenue 21 qui sont décalés angulairement les uns des autres et qui sont disposés à proximité du bord périphérique externe du premier organe d'obturation 16. Les premiers doigts de retenue 21 sont configurés pour reposer sur la partie d'obturation fixe 12 lorsque le premier organe d'obturation 16 occupe la première position de libération. Dans l'exemple illustré, les premiers doigts de retenue 21 sont également configurés pour bloquer en rotation le premier organe d'obturation 16 par rapport à la partie d'obturation fixe 12 lorsque le premier organe d'obturation 16 est déplacé entre la première position d'obturation et la première position de libération.

De façon similaire, le deuxième organe d'obturation 18 comporte également une pluralité de deuxièmes doigts de retenue 22 qui sont décalés angulairement les uns des autres et qui sont disposés à proximité du bord périphérique externe du deuxième organe d'obturation 18. Les deuxièmes doigts de retenue 22 sont configurés pour reposer sur le premier organe d'obturation 16 fixe lorsque le deuxième organe d'obturation 18 occupe la deuxième position de libération. Dans l'exemple illustré, les deuxièmes doigts de retenue 22 sont également configurés pour bloquer en rotation le deuxième organe d'obturation 18 par rapport au premier organe d'obturation 16 lorsque le deuxième organe d'obturation 18 est déplacé entre la deuxième position d'obturation et la deuxième position de libération.

Le couvercle intérieur 8 comporte en outre un joint d'étanchéité annulaire 23 qui est fixé à la partie d'obturation fixe 12 et qui est configuré pour coopérer de manière étanche avec un bord périphérique supérieur de la cuve de cuisson 4 lorsque le couvercle 6 occupe la position fermée.

L'appareil de cuisson électrique 2 comporte également un ventilateur 24 qui est configuré pour générer un flux d'air dans le volume de cuisson 5, et un dispositif de chauffage 25 qui est configuré pour chauffer le flux d'air généré par le ventilateur 24.

Selon le mode de réalisation représenté sur les figures, le dispositif de chauffage 25 comporte un élément chauffant 26 résistif qui est fixé à la partie d'obturation fixe 12 et qui s'étend le long de la face inférieure de la partie d'obturation fixe 12. Ainsi, l'élément chauffant 26 résistif est configuré pour être situé en regard de l'ouverture d'accès 4.3 de la cuve de cuisson 4 lorsque le couvercle 6 occupe la position fermée.

L'élément chauffant 26 résistif est configuré pour s'étendre en partie autour et à proximité du passage d'admission d'air 15 lorsque la partie d'obturation mobile 13 occupe la configuration abaissée. De façon avantageuse, l'élément chauffant 26 résistif est situé en partie en regard du passage d'admission d'air 15 lorsque la partie d'obturation mobile 13 est dans la configuration abaissée. L'élément chauffant 26 résistif peut présenter une forme globalement en arc de cercle ayant un angle au centre supérieur à 180°, et par exemple supérieur à 270°.

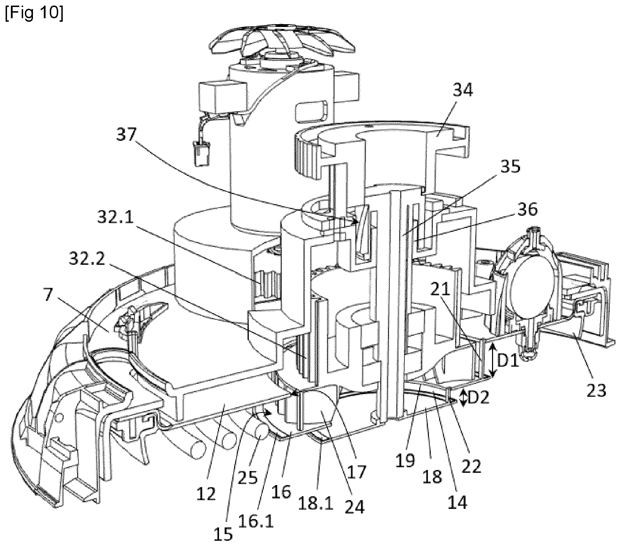

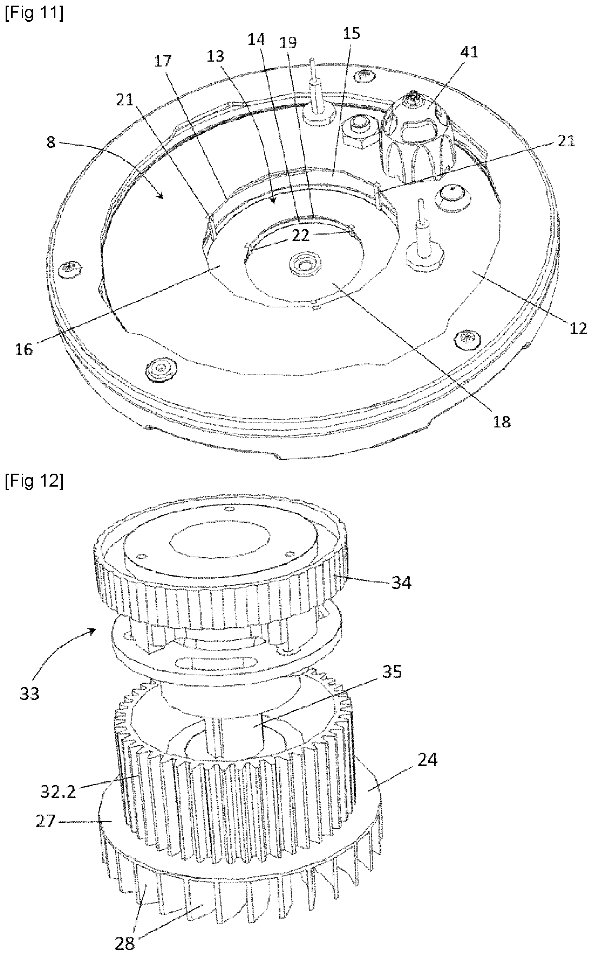

Comme montré sur les figures 10 et 12, le ventilateur 24 est un ventilateur radial centrifuge, et comporte une roue annulaire 27 comprenant une pluralité d'aubes 28 qui sont configurées de telle sorte que le flux d'air généré est évacué hors du volume de cuisson 5 en s'écoulant à travers le passage d'évacuation d'air 14 et est réintroduit dans le volume de cuisson 5 en s'écoulant à travers le passage d'admission d'air 15. De façon avantageuse, lorsque la partie d'obturation mobile 13 est dans la configuration abaissée, le ventilateur 24 est configuré pour orienter le flux d'air provenant du passage d'évacuation d'air 14 radialement vers l'extérieur et en direction du passage d'admission d'air 15.

L'appareil de cuisson électrique 2 comporte de plus une unité d'entraînement 29 configurée pour entraîner en rotation le ventilateur 24. L'unité d'entraînement 29 comporte notamment un moteur d'entraînement 31, visible à la figure 4, et un mécanisme de transmission de mouvement 32 qui est configuré pour transmettre un mouvement de rotation du moteur d'entraînement 31 au ventilateur 24. Le mécanisme de transmission de mouvement 32 peut par exemple comporter un engrenage 32.1 couplé en rotation à un arbre de sortie du moteur d'entraînement 31 et une roue dentée 32.2 solidaire en rotation du ventilateur 24.

Selon le mode de réalisation représenté sur les figures, le ventilateur 24 est disposé en regard du couvercle intérieur 8 et est déplaçable en translation par rapport à la partie d'obturation fixe 12 selon la direction de déplacement D et entre une première position de ventilateur dans laquelle le ventilateur 24 est situé dans la chambre interne 9 et est éloigné du dispositif de chauffage 25, et une deuxième position de ventilateur dans laquelle le ventilateur 24 est rapproché du dispositif de chauffage 25 et est configuré pour être situé en regard du passage d'admission d'air 15. De façon avantageuse, le ventilateur 24 est disposé dans la chambre interne 9 et en retrait de la première ouverture de passage 17 lorsque le ventilateur 24 occupe la première position de ventilateur, et est situé au-delà de la première ouverture de passage 17 lorsque le ventilateur 24 occupe la deuxième position de ventilateur.

L'appareil de cuisson électrique 2 est plus particulièrement configuré de telle sorte que le ventilateur 24 occupe la première position de ventilateur lorsque la partie d'obturation mobile 13 est dans la configuration relevée, et de telle sorte que le ventilateur 24 occupe la deuxième position de ventilateur lorsque la partie d'obturation mobile 13 est dans la configuration abaissée.

A cet effet, l'appareil de cuisson électrique 2 comporte un mécanisme d'entraînement 33 configuré pour déplacer simultanément la partie d'obturation mobile 13 de la configuration relevée à la configuration abaissée et le ventilateur 24 de la première position de ventilateur à la deuxième position de ventilateur, et pour déplacer simultanément la partie d'obturation mobile 13 de la configuration abaissée à la configuration relevée et le ventilateur 24 de la deuxième position de ventilateur à la première position de ventilateur.

Selon le mode de réalisation représenté sur les figures, le mécanisme d'entraînement 33 comporte un organe de préhension 34 qui est configuré pour être manipulé par un utilisateur. Cet organe de préhension 34 est monté rotatif par rapport au corps de couvercle 7 autour d'un axe de rotation A qui est avantageusement sensiblement parallèle à la direction de déplacement D.

Le mécanisme d'entraînement 33 comporte également un arbre de déplacement 35 qui a un axe longitudinal s'étendant sensiblement parallèlement à la direction de déplacement D et qui est déplaçable en translation par rapport au corps de couvercle 7 selon la direction de déplacement D. De façon avantageuse, l'appareil de cuisson électrique 2 comporte un organe de guidage 36 qui est fixé au corps de couvercle 7 et qui est configuré pour guider en translation l'arbre de déplacement 35 par rapport au corps de couvercle 7.

L'arbre de déplacement 35 est relié mécaniquement à l'organe de préhension 34 par l'intermédiaire d'un mécanisme de transformation de mouvement 37 de telle sorte qu'une rotation de l'organe de préhension 34 dans un premier sens de rotation entraîne un déplacement en translation de l'arbre de déplacement 35 en direction de la cuve de cuisson 4, c'est-à-dire vers le bas, lorsque le couvercle 6 occupe la position fermée, et de telle sorte qu'une rotation de l'organe de préhension 34 dans un deuxième sens de rotation, opposé au premier sens de rotation, entraîne un déplacement en translation de l'arbre de déplacement 35 à l'opposé de la cuve de cuisson 4, c'est-à-dire vers le haut, lorsque le couvercle 6 occupe la position fermée.

Selon le mode de réalisation représenté sur les figures, le ventilateur 24 est disposé autour de l'arbre de déplacement 35 et est solidaire en translation de l'arbre de déplacement 35. A cet effet, l'appareil de cuisson électrique 2 comporte deux paliers 38, tels que des roulements à bille, dont les bagues intérieures sont fixées à l'arbre de déplacement 35 et qui sont configurés pour supporter en rotation le ventilateur 24. Chacun des paliers 38 peut par exemple être interposé entre la roue dentée 32.2 et l'arbre de déplacement 35. Selon une variante de réalisation de l'invention, l'appareil de cuisson électrique 2 pourrait comporter un seul palier 38 interposé entre la roue dentée 32.2 et l'arbre de déplacement 35.

L'arbre de déplacement 35 est également relié mécaniquement à la partie d'obturation mobile 13 de telle sorte qu'une rotation de l'organe de préhension 34 dans le premier sens de rotation entraîne un déplacement de la partie d'obturation mobile 13 vers la configuration abaissée et de telle sorte qu'une rotation de l'organe de préhension 34 dans le deuxième sens de rotation entraîne un déplacement de la partie d'obturation mobile 13 vers la configuration relevée.

Selon le mode de réalisation représenté sur les figures, le deuxième organe d'obturation 18 est fixé à une portion d'extrémité inférieure de l'arbre de déplacement 35, et est configuré pour être déplacé par l'arbre de déplacement 35 selon une course ascendante lorsque l'organe de préhension 34 est entraîné en rotation dans le deuxième sens de rotation, la course ascendante comprenant une première portion de course ascendante durant laquelle le deuxième organe d'obturation 18 est déplacé en direction du premier organe d'obturation 16 jusqu'à venir en butée contre une face inférieure du premier organe d'obturation 16 et une deuxième portion de course ascendante durant laquelle les premier et deuxième organes d'obturation 16, 18 sont déplacés en direction de la partie d'obturation fixe 12 jusqu'à ce que les premier et deuxième organes d'obturation 16, 18 atteignent respectivement les première et deuxième positions d'obturation.

Le deuxième organe d'obturation 18 est également configuré pour être déplacé par l'arbre de déplacement 35 selon une course descendante lorsque l'organe de préhension 34 est entraîné en rotation dans le premier sens de rotation, la course descendante comprenant une première portion de course descendante durant laquelle les premier et deuxième organes d'obturation 16, 18 sont déplacés à distance de la partie d'obturation fixe 12 jusqu'à ce que le premier organe d'obturation 16 atteigne la première position de libération et une deuxième portion de course descendante durant laquelle le deuxième organe d'obturation 18 est déplacé à distance du premier organe d'obturation 16 jusqu'à ce que le deuxième organe d'obturation 18 atteigne la deuxième positions de libération. Durant la première portion de course descendante, le premier organe d'obturation 16 est supporté par le deuxième organe d'obturation 18.

L'appareil de cuisson électrique 2 comporte en outre une soupape de refoulement 41 qui est fixée au couvercle 6, et par exemple à la partie d'obturation fixe 12, et qui peut être configurée pour relier fluidiquement de manière automatique le volume de cuisson 5 avec l'atmosphère lorsque la pression dans le volume de cuisson 5 dépasse une valeur de seuil prédéterminée.

L'appareil de cuisson électrique 2 comprend avantageusement un dispositif de chauffage additionnel 42 qui est disposé dans le boîtier 3 et qui est configuré pour chauffer la cuve de cuisson 4 par conduction. Le dispositif de chauffage additionnel 42 peut par exemple comporter un autre élément chauffant résistif, et est avantageusement disposé en dessous de la paroi de fond 4.1 de la cuve de cuisson 4.

L'appareil de cuisson électrique 2 comporte également une unité de commande 43 qui comporte par exemple un contrôleur, tel qu'un microcontrôleur, ou un processeur, tel qu'un microprocesseur, et qui est configurée pour commander le fonctionnement de l'appareil de cuisson électrique 2, et notamment du dispositif de chauffage 25, du dispositif de chauffage additionnel 42, du moteur d'entraînement 31, du ventilateur 24 mais également de la soupape de refoulement dans un mode de réalisation particulier.

L'unité de commande 43 est plus particulièrement configurée pour commander le fonctionnement de l'appareil de cuisson électrique 2 selon un mode de cuisson sous pression lorsque simultanément le couvercle 6 occupe la position fermée et la partie d'obturation mobile 13 est dans la configuration relevée, et selon un mode de cuisson à air chaud lorsque simultanément le couvercle 6 occupe la position fermée et la partie d'obturation mobile 13 est dans la configuration abaissée.

Lorsqu'un utilisateur souhaite cuire des aliments contenus dans la cuve de cuisson 4 selon un mode de cuisson sous pression, il déplace le couvercle 6 dans la position fermée et entraîne en rotation l'organe de préhension 34 dans le deuxième sens de rotation de manière à déplacer la partie d'obturation mobile 13 dans la configuration relevée. Le volume de cuisson 5 est donc isolé fluidiquement de la chambre interne 9 et des ouvertures d'évacuation d'air 11.

L'utilisateur peut alors commander un mode de cuisson sous pression à l'aide d'une interface utilisateur prévue sur le boîtier 3, et l'unité de commande 43 commande alors une activation du dispositif de chauffage additionnel 42 de manière à chauffer la cuve de cuisson 4 et donc les aliments contenus dans cette dernière. Le volume de cuisson 5 étant isolé fluidiquement de la chambre interne 9, la pression au sein de la cuve de cuisson augmente, ce qui permet de cuire les aliments sous pression.

Lorsqu'un utilisateur souhaite cuire des aliments contenus dans la cuve de cuisson 4 selon un mode de cuisson à air chaud, il déplace le couvercle 6 dans la position fermée et entraîne en rotation l'organe de préhension 34 dans le premier sens de rotation de manière à déplacer la partie d'obturation mobile 13 dans la configuration abaissée. Dans une telle configuration de la partie d'obturation mobile, le volume de cuisson 5 est relié fluidiquement à la chambre interne 9 et aux ouvertures d'évacuation d'air 11.

L'utilisateur peut alors commander un mode de cuisson à air chaud à l'aide de l'interface utilisateur prévue sur le boîtier 3, et l'unité de commande 43 commande alors une activation du moteur d'entraînement 31 de manière à entraîner en rotation le ventilateur 24 et générer un flux d'air au sein de la cuve de cuisson 4 et également une activation du dispositif de chauffage 25 de manière à chauffer ce flux d'air généré par le ventilateur 24. La disposition spécifique du dispositif de chauffage 25 en regard du passage d'admission d'air 15 permet de transmettre un maximum de calories au flux d'air et ainsi d'optimiser la cuisson à air chaud obtenue avec l'appareil de cuisson électrique 2 selon la présente invention.

L'appareil de cuisson électrique 2 selon la présente invention permet également de pouvoir gratiner les aliments contenus dans la cuve de cuisson. Par exemple, en sélectionnant un mode de cuisson gratinée, l'unité de commande 43 peut commander, en fin de cycle de cuisson à air chaud, un arrêt du moteur d'entraînement 31 tout en maintenant une alimentation électrique du dispositif de chauffage 25, ce qui assure, du fait de sa position en regard de l'ouverture d'accès de la cuve de cuisson 4, une cuisson gratinée des aliments.

Il est également possible de lancer un mode de cuisson gratinée en fin de cycle de cuisson sous pression.

Selon un mode de réalisation non représenté sur les figures, l'appareil de cuisson électrique 2 pourrait être dépourvu d'organe de préhension 34 et pourrait comprendre à la place un moteur électrique qui serait relié mécaniquement à l'arbre de déplacement 35 de telle sorte qu'une rotation du moteur électrique dans un premier sens de rotation entraînerait un déplacement en translation de l'arbre de déplacement 35 vers le bas et de telle sorte qu'une rotation du moteur électrique dans un deuxième sens de rotation entraînerait un déplacement en translation de l'arbre de déplacement 35 vers le haut.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention, qui est défini dans les revendications.

## Revendications

1. Appareil de cuisson électrique (2) comprenant :
- un boîtier (3) comportant une cuve de cuisson (4) qui délimite un volume de cuisson (5) et qui comprend une ouverture d'accès (4.3) à travers laquelle des aliments peuvent être introduits dans le volume de cuisson (5), et un couvercle (6) déplaçable entre une position ouverte dans laquelle le couvercle (6) autorise un accès à la cuve de cuisson (4) et une position fermée dans laquelle le couvercle (6) empêche l'accès à la cuve de cuisson (4), le couvercle (6) comportant un corps de couvercle (7) et un couvercle intérieur (8) fixé au corps de couvercle (7), le couvercle intérieur (8) comportant une partie d'obturation fixe (12) qui est fixée au corps de couvercle (7) et une partie d'obturation mobile (13) qui est déplaçable par rapport à la partie d'obturation fixe (12) selon une direction de déplacement (D) et entre une configuration relevée dans laquelle la partie d'obturation fixe (12) et la partie d'obturation mobile (13) obturent de manière étanche la cuve de cuisson (4) lorsque le couvercle (6) est dans la position fermée, et une configuration abaissée dans laquelle lorsque le couvercle (6) est dans la position fermée alors la partie d'obturation fixe (12) et la partie d'obturation mobile (13) définissent un passage d'évacuation d'air (14) vers l'extérieur du volume de cuisson (5) et un passage d'admission d'air (15) vers l'intérieur du volume de cuisson (5),
- un mécanisme d'entraînement (33) configuré pour déplacer la partie d'obturation mobile (13) entre la configuration abaissée et la configuration relevée,
- un ventilateur (24) disposé dans le couvercle (6) en regard du couvercle intérieur (8), et configuré pour générer un flux d'air dans le volume de cuisson (5), le ventilateur (24) étant configuré de telle sorte que le flux d'air généré est évacué hors du volume de cuisson (5) en s'écoulant à travers le passage d'évacuation d'air (14) et est réintroduit dans le volume de cuisson (5) en s'écoulant à travers le passage d'admission d'air (15), et
- un dispositif de chauffage (25) qui est fixé au couvercle (6) et qui est configuré pour chauffer le flux d'air généré par le ventilateur (24), **caractérisé en ce que** le dispositif de chauffage (25) est disposé sur une face inférieure du couvercle intérieur (8) et situé en regard du volume de cuisson (5) lorsque le couvercle (6) occupe la position fermée, et **en ce que** le dispositif de chauffage (25) est situé à proximité du passage d'admission d'air (15) lorsque la partie d'obturation mobile (13) est dans la configuration abaissée.

2. Appareil de cuisson électrique (2) selon la revendication 1, dans lequel le dispositif de chauffage (25) est configuré pour être situé au moins en partie en regard du passage d'admission d'air (15) lorsque la partie d'obturation mobile (13) est dans la configuration abaissée.

3. Appareil de cuisson électrique (2) selon la revendication 1 ou 2, dans lequel, lorsque la partie d'obturation mobile (13) est dans la configuration abaissée, le ventilateur (24) est configuré pour orienter radialement le flux d'air provenant du passage d'évacuation d'air (14) en direction du passage d'admission d'air (15).

4. Appareil de cuisson électrique (2) selon l'une quelconque des revendications 1 à 3, dans lequel le ventilateur (24) est déplaçable par rapport à la partie d'obturation fixe (12) selon la direction de déplacement (D) et entre une première position de ventilateur dans laquelle le ventilateur (24) est éloigné du dispositif de chauffage (25) et la partie d'obturation mobile (13) est dans la configuration relevée, et une deuxième position de ventilateur dans laquelle le ventilateur (24) est rapproché du dispositif de chauffage (25) et la partie d'obturation mobile (13) est dans la configuration abaissée.

5. Appareil de cuisson électrique (2) selon l'une quelconque des revendications 1 à 4, dans lequel le couvercle intérieur (8) et le corps de couvercle (7) délimitent une chambre interne (9) du couvercle qui est configurée pour être reliée fluidiquement au volume de cuisson (5) lorsque la partie d'obturation mobile (13) est dans la configuration abaissée, et pour être isolée fluidiquement du volume de cuisson (5) lorsque la partie d'obturation mobile (13) est dans la configuration relevée.

6. Appareil de cuisson électrique (2) selon l'une quelconque des revendications 1 à 5, dans lequel le passage d'admission d'air (15) est globalement annulaire et le dispositif de chauffage (25) est configuré pour s'étendre au moins en partie autour du passage d'admission d'air (15).

7. Appareil de cuisson électrique (2) selon l'une quelconque des revendications 1 à 6, dans lequel le passage d'admission d'air (15) et le passage d'évacuation d'air (14) s'étendent sensiblement coaxialement.

8. Appareil de cuisson électrique (2) selon l'une quelconque des revendications 1 à 7, dans lequel la partie d'obturation mobile (13) comporte :
- un premier organe d'obturation (16) qui est déplaçable par rapport à la partie d'obturation fixe (12) selon la direction de déplacement (D), le premier organe d'obturation (16) étant configuré pour obturer une première ouverture de passage (17) prévue sur la partie d'obturation fixe (12) lorsque la partie d'obturation mobile (13) est dans la configuration relevée et pour libérer la première ouverture de passage (17) lorsque la partie d'obturation mobile (13) est dans la configuration abaissée, le premier organe d'obturation (16) et la partie d'obturation fixe (12) étant configurés pour délimiter le passage d'admission d'air (15) lorsque la partie d'obturation mobile (13) est dans la configuration abaissée, et
- un deuxième organe d'obturation (18) qui est déplaçable par rapport au premier organe d'obturation (16) selon la direction de déplacement (D), le deuxième organe d'obturation (18) étant configuré pour obturer une deuxième ouverture de passage (19) prévue sur le premier organe d'obturation (16) lorsque la partie d'obturation mobile (13) est dans la configuration relevée et pour libérer la deuxième ouverture de passage (19) lorsque la partie d'obturation mobile (13) est dans la configuration abaissée, les premier et deuxième organes d'obturation (16, 18) étant configurés pour délimiter le passage d'évacuation d'air (14) lorsque la partie d'obturation mobile (13) est dans la configuration abaissée.

9. Appareil de cuisson électrique (2) selon la revendication 8, dans lequel les premier et deuxième organes d'obturation (16, 18) sont disposés coaxialement.

10. Appareil de cuisson électrique (2) selon l'une quelconque des revendications 1 à 9, dans lequel le couvercle intérieur (8) est fixé de manière amovible au corps de couvercle (7).

11. Appareil de cuisson électrique (2) selon l'une quelconque des revendications 1 à 10, dans lequel le mécanisme d'entraînement (33) comporte un organe de préhension (34) qui est configuré pour être manipulé par un utilisateur et qui est monté rotatif par rapport au corps de couvercle (7) autour d'un axe de rotation (A), le mécanisme d'entraînement (33) étant configuré de telle sorte qu'une rotation de l'organe de préhension (34) dans un premier sens de rotation entraîne un déplacement de la partie d'obturation mobile (13) dans la configuration abaissée et de telle sorte qu'une rotation de l'organe de préhension (34) dans un deuxième sens de rotation, opposé au premier sens de rotation, entraîne un déplacement de la partie d'obturation mobile (13) dans la configuration relevée.

12. Appareil de cuisson électrique (2) selon la revendication 11, dans lequel le mécanisme d'entraînement (33) comporte un arbre de déplacement (35) ayant un axe longitudinal qui s'étend sensiblement parallèlement à la direction de déplacement (D), l'arbre de déplacement (35) étant déplaçable en translation par rapport au corps de couvercle (7) selon la direction de déplacement (D), l'arbre de déplacement (35) étant relié mécaniquement à l'organe de préhension (34) et à la partie d'obturation mobile (13) de telle sorte qu'une rotation de l'organe de préhension (34) dans le premier sens de rotation entraîne un déplacement en translation vers le bas de l'arbre de déplacement (35) et un déplacement de la partie d'obturation mobile (13) vers la configuration abaissée et de telle sorte qu'une rotation de l'organe de préhension (34) dans le deuxième sens de rotation entraîne un déplacement en translation vers le haut de l'arbre de déplacement (35) et un déplacement de la partie d'obturation mobile (13) vers la configuration relevée.

## Patentansprüche

1. Elektrisches Kochgerät (2), umfassend:
- ein Gehäuse (3), das einen Kochbehälter (4) umfasst, der ein Kochvolumen (5) begrenzt und der eine Zugangsöffnung (4.3), durch die Nahrungsmittel in das Kochvolumen (5) eingeführt werden können, und einen Deckel (6) umfasst, der zwischen einer offenen Position, in der der Deckel (6) einen Zugang zum Kochbehälter (4) gestattet, und einer geschlossenen Position bewegt werden kann, in der der Deckel (6) den Zugang zum Kochbehälter (4) verhindert, wobei der Deckel (6) einen Deckelkörper (7) und einen Innendeckel (8) umfasst, der am Deckelkörper (7) befestigt ist, wobei der Innendeckel (8) einen festen Verschlussteil (12), der am Deckelkörper (7) befestigt ist, und einen beweglichen Verschlussteil (13) umfasst, der in Bezug auf den festen Verschlussteil (12) entlang einer Bewegungsrichtung (D) und zwischen einer angehobenen Konfiguration, in der der feste Verschlussteil (12) und der bewegliche Verschlussteil (13) den Kochbehälter (4) dicht verschließen, wenn sich der Deckel (6) in der geschlossenen Position befindet, und einer abgesenkten Konfiguration bewegt werden kann, wobei, wenn sich der Deckel (6) in der geschlossenen Position befindet, der feste Verschlussteil (12) und der bewegliche Verschlussteil (13) einen Luftauslasskanal (14) zur Außenseite des Kochvolumens (5) und einen Lufteinlasskanal (15) zur Innenseite des Kochvolumens (5) definieren,
- einen Antriebsmechanismus (33), der so konfiguriert ist, dass er den beweglichen Verschlussteil (13) zwischen der abgesenkten Konfiguration und der angehobenen Konfiguration bewegt,
- einen Lüfter (24), der im Deckel (6) dem Innendeckel (8) zugewandt angeordnet und so konfiguriert ist, dass er einen Luftstrom im Kochvolumen (5) erzeugt, wobei der Lüfter (24) derart konfiguriert ist, dass der erzeugte Luftstrom aus dem Kochvolumen (5) ausgelassen wird, indem er durch den Luftauslasskanal (14) strömt, und wieder in das Kochvolumen (5) eingeführt wird, indem er durch den Lufteinlasskanal (15) strömt, und
- eine Heizvorrichtung (25), die am Deckel (6) befestigt ist und die so konfiguriert ist, dass sie den vom Lüfter (24) erzeugten Luftstrom erhitzt,
**dadurch gekennzeichnet, dass** die Heizvorrichtung (25) auf einer Unterseite des Innendeckels (8) angeordnet ist und dem Kochvolumen (5) zugewandt liegt, wenn der Deckel (6) die geschlossene Position einnimmt, und dadurch, dass die Heizvorrichtung (25) in der Nähe des Lufteinlasskanals (15) liegt, wenn sich der bewegliche Verschlussteil (13) in der abgesenkten Konfiguration befindet.

2. Elektrisches Kochgerät (2) nach Anspruch 1, wobei die Heizvorrichtung (25) so konfiguriert ist, dass sie mindestens zum Teil dem Lufteinlasskanal (15) zugewandt liegt, wenn sich der bewegliche Verschlussteil (13) in der abgesenkten Konfiguration befindet.

3. Elektrisches Kochgerät (2) nach Anspruch 1 oder 2, wobei der Lüfter (24) so konfiguriert ist, dass er, wenn sich der bewegliche Verschlussteil (13) in der abgesenkten Konfiguration befindet, den aus dem Luftauslasskanal (14) kommenden Luftstrom radial in Richtung des Lufteinlasskanals (15) lenkt.

4. Elektrisches Kochgerät (2) nach einem der Ansprüche 1 bis 3, wobei der Lüfter (24) in Bezug auf den festen Verschlussteil (12) entlang der Bewegungsrichtung (D) und zwischen einer ersten Lüfterposition, in der der Lüfter (24) von der Heizvorrichtung (25) entfernt ist und sich der bewegliche Verschlussteil (13) in der angehobenen Konfiguration befindet, und einer zweiten Lüfterposition bewegt werden kann, in der der Lüfter (24) der Heizvorrichtung (25) angenähert ist und sich der bewegliche Verschlussteil (13) in der abgesenkten Konfiguration befindet.

5. Elektrisches Kochgerät (2) nach einem der Ansprüche 1 bis 4, wobei der Innendeckel (8) und der Deckelkörper (7) eine Innenkammer (9) des Deckels begrenzen, die so konfiguriert ist, dass sie strömungstechnisch mit dem Kochvolumen (5) verbunden ist, wenn sich der bewegliche Verschlussteil (13) in der abgesenkten Konfiguration befindet, und dass sie strömungstechnisch vom Kochvolumen (5) isoliert ist, wenn sich der bewegliche Verschlussteil (13) in der angehobenen Konfiguration befindet.

6. Elektrisches Kochgerät (2) nach einem der Ansprüche 1 bis 5, wobei der Lufteinlasskanal (15) insgesamt ringförmig ist und die Heizvorrichtung (25) so konfiguriert ist, dass sie sich mindestens zum Teil um den Lufteinlasskanal (15) herum erstreckt.

7. Elektrisches Kochgerät (2) nach einem der Ansprüche 1 bis 6, wobei sich der Lufteinlasskanal (15) und der Luftauslasskanal (14) im Wesentlichen koaxial erstrecken.

8. Elektrisches Kochgerät (2) nach einem der Ansprüche 1 bis 7, wobei der bewegliche Verschlussteil (13) umfasst:
- ein erstes Verschlussorgan (16), das in Bezug auf den festen Verschlussteil (12) entlang der Bewegungsrichtung (D) bewegt werden kann, wobei das erste Verschlussorgan (16) so konfiguriert ist, dass es eine erste Kanalöffnung (17), die am festen Verschlussteil (12) vorgesehen ist, verschließt, wenn sich der bewegliche Verschlussteil (13) in der angehobenen Konfiguration befindet, und die erste Kanalöffnung (17) freigibt, wenn sich der bewegliche Verschlussteil (13) in der abgesenkten Konfiguration befindet, wobei das erste Verschlussorgan (16) und der feste Verschlussteil (12) so konfiguriert sind, dass sie den Lufteinlasskanal (15) begrenzen, wenn sich der bewegliche Verschlussteil (13) in der abgesenkten Konfiguration befindet, und
- ein zweites Verschlussorgan (18), das in Bezug auf das erste Verschlussorgan (16) entlang der Bewegungsrichtung (D) bewegt werden kann, wobei das zweite Verschlussorgan (18) so konfiguriert ist, dass es eine zweite Kanalöffnung (19), die am ersten Verschlussorgan (16) vorgesehen ist, verschließt, wenn sich der bewegliche Verschlussteil (13) in der angehobenen Konfiguration befindet, und die zweite Kanalöffnung (19) freigibt, wenn sich der bewegliche Verschlussteil (13) in der abgesenkten Konfiguration befindet, wobei das erste und das zweite Verschlussorgan (16, 18) so konfiguriert sind, dass sie den Luftauslasskanal (14) begrenzen, wenn sich der bewegliche Verschlussteil (13) in der abgesenkten Konfiguration befindet.

9. Elektrisches Kochgerät (2) nach Anspruch 8, wobei das erste und das zweite Verschlussorgan (16, 18) koaxial angeordnet sind.

10. Elektrisches Kochgerät (2) nach einem der Ansprüche 1 bis 9, wobei der Innendeckel (8) abnehmbar am Deckelkörper (7) befestigt ist.

11. Elektrisches Kochgerät (2) nach einem der Ansprüche 1 bis 10, wobei der Antriebsmechanismus (33) ein Greiforgan (34) umfasst, das so konfiguriert ist, dass es von einem Benutzer gehandhabt werden kann und das in Bezug auf den Deckelkörper (7) um eine Drehachse (A) drehbar angebracht ist, wobei der Antriebsmechanismus (33) derart konfiguriert ist, dass eine Drehung des Greiforgans (34) in eine erste Drehrichtung eine Bewegung des beweglichen Verschlussteils (13) in die abgesenkte Konfiguration bewirkt, und derart, dass eine Drehung des Greiforgans (34) in eine zweite Drehrichtung, die der ersten Drehrichtung entgegengesetzt ist, eine Bewegung des beweglichen Verschlussteils (13) in die angehobene Konfiguration bewirkt.

12. Elektrisches Kochgerät (2) nach Anspruch 11, wobei der Antriebsmechanismus (33) eine Bewegungswelle (35) umfasst, die eine Längsachse aufweist, die sich im Wesentlichen parallel zur Bewegungsrichtung (D) erstreckt, wobei die Bewegungswelle (35) in Bezug auf den Deckelkörper (7) entlang der Bewegungsrichtung (D) verschiebebeweglich ist, wobei die Bewegungswelle (35) mechanisch derart mit dem Greiforgan (34) und dem beweglichen Verschlussteil (13) verbunden ist, dass eine Drehung des Greiforgans (34) in die erste Drehrichtung eine Verschiebebewegung der Bewegungswelle (35) nach unten und eine Bewegung des beweglichen Verschlussteils (13) in die abgesenkte Konfiguration bewirkt, und derart, dass eine Drehung des Greiforgans (34) in die zweite Drehrichtung eine Verschiebebewegung der Bewegungswelle (35) nach oben und eine Bewegung des beweglichen Verschlussteils (13) in die angehobene Konfiguration bewirkt.

## Claims

1. Electrical cooking appliance (2) comprising:
- a case (3) comprising a cooking vat (4) that delimits a cooking volume (5) and which comprises an access opening (4.3) through which food can be introduced into the cooking volume (5), and a lid (6) that can be moved between an open position wherein the lid (6) allows an access to the cooking vat (4) and a closed position wherein the lid (6) prevents access to the cooking vat (4), the lid (6) comprising a lid body (7) and an inner lid (8) attached to the lid body (7), the inner lid (8) comprising a fixed closure portion (12) that is attached to the lid body (7) and a movable closure portion (13) that can be moved relative to the fixed closure portion (12) according to a direction of movement (D) and between a raised configuration wherein the fixed closure portion (12) and the movable closure portion (13) tightly close the cooking vat (4) when the lid (6) is in the closed position, and a lowered configuration wherein when the lid (6) is in the closed position then the fixed closure portion (12) and the movable closure portion (13) define an air vent passage (14) to the outside of the cooking volume (5) and an air intake passage (15) to the inside of the cooking volume (5),
- a drive mechanism (33) configured to move the movable closure portion (13) between the lowered configuration and the raised configuration,
- a fan (24) arranged in the lid (6) facing the inner lid (8), and configured to generate an airflow in the cooking volume (5), the fan (24) being configured in such a way that the airflow generated is discharged outside the cooking volume (5) by flowing through the air vent passage (14) and is reintroduced into the cooking volume (5) by flowing through the air intake passage (15), and
- a heating device (25) that is attached to the lid (6) and which is configured to heat the airflow generated by the fan (24),
**characterized in that** the heating device (25) is arranged on a lower face of the inner lid (8) and located facing the cooking volume (5) when the lid (6) occupies the closed position, and **in that** the heating device (25) is located in the vicinity of the air intake passage (15) when the movable closure portion (13) is in the lowered configuration.

2. Electrical cooking appliance (2) according to claim 1, wherein the heating device (25) is configured to be located at least partially facing the air intake passage (15) when the movable closure portion (13) is in the lowered configuration.

3. Electrical cooking appliance (2) according to claim 1 or 2, wherein when the movable closure portion (13) is in the lowered configuration, the fan (24) is configured to radially direct the airflow coming from the air vent passage (14) in the direction of the air intake passage (15).

4. Electrical cooking appliance (2) according to any one of claims 1 to 3, wherein the fan (24) can be moved relative to the fixed closure portion (12) according to the direction of movement (D) and between a first fan position wherein the fan (24) is separated from the heating device (25) and the movable closure portion (13) is in the raised configuration, and a second fan position wherein the fan (24) is close to the heating device (25) and the movable closure portion (13) is in the lowered configuration.

5. Electrical cooking appliance (2) according to any one of claims 1 to 4, wherein the inner lid (8) and the lid body (7) delimit an internal chamber (9) of the lid that is configured to be fluidically connected to the cooking volume (5) when the movable closure portion (13) is in the lowered configuration, and to be fluidically isolated from the cooking volume (5) when the movable closure portion (13) is in the raised configuration.

6. Electrical cooking appliance (2) according to any one of claims 1 to 5, wherein the air intake passage (15) is globally annular and the heating device (25) is configured to extend at least partially around the air intake passage (15).

7. Electrical cooking appliance (2) according to any one of claims 1 to 6, wherein the air intake passage (15) and the air vent passage (14) extend substantially coaxially.

8. Electrical cooking appliance (2) according to any one of claims 1 to 7, wherein the movable closure portion (13) comprises:
- a first closure member (16) that can be moved relative to the fixed closure portion (12) according to the direction of movement (D), the first closure member (16) being configured to close a first passage opening (17) provided on the fixed closure portion (12) when the movable closure portion (13) is in the raised configuration and to release the first passage opening (17) when the movable closure portion (13) is in the lowered configuration, the first closure member (16) and the fixed closure portion (12) being configured to delimit the air intake passage (15) when the movable closure portion (13) is in the lowered position, and
- a second closure member (18) that can be moved relative to the first closure member (16) according to the direction of movement (D), the second closure member (18) being configured to close a second passage opening (19) provided on the first closure member (16) when the movable closure portion (13) is in the raised configuration and to release the second passage opening (19) when the movable closure portion (13) is in the lowered configuration, the first and second closure members (16, 18) being configured to delimit the air vent passage (14) when the movable closure portion (13) is in the lowered configuration.

9. Electrical cooking appliance (2) according to claim 8, wherein the first and second closure members (16, 18) are arranged coaxially.

10. Electrical cooking appliance (2) according to any one of claims 1 to 9, wherein the inner lid (8) is removably attached to the lid body (7).

11. Electrical cooking appliance (2) according to any one of claims 1 to 10, wherein the drive mechanism (33) comprises a gripping member (34) that is configured to be manipulated by a user and that is rotatably mounted relative to the lid body (7) about an axis of rotation (A), the drive mechanism (33) being configured in such a way that a rotation of the gripping member (34) in a first direction of rotation drives a movement of the movable closure portion (13) in the lowered configuration and in such a way that the rotation of the gripping member (34) in a second direction of rotation, opposite the first direction of rotation, drives a movement of the movable closure portion (13) in the raised configuration.

12. Electrical cooking appliance (2) according to claim 11, wherein the drive mechanism (33) comprises a displacement shaft(35) having a longitudinal axis that extends substantially parallel to the direction of movement (D), the displacement shaft (35) able to be moved in translation relative to the lid body (7) according to the direction of movement (D), the displacement shaft (35) being mechanically connected to the gripping member (34) and to the movable closure portion (13) in such a way that a rotation of the gripping member (34) in the first direction of rotation drives a movement in translation downwards of the displacement shaft (35) and a movement of the movable closure portion (13) to the lowered configuration and in such a way that a rotation of the gripping member (34) in a second direction of rotation drives a movement in translation upwards of the displacement shaft (35) and a movement of the movable closure portion (13) to the raised configuration.
